# EUROPÄISCHE PATENTSCHRIFT

(11) **EP 3 336 949 B1**
(45) Veröffentlichungstag und Bekanntmachung des Hinweises auf die Patenterteilung: **13.11.2019**
(21) Anmeldenummer: 17207240.7
(22) Anmeldetag: 14.12.2017
(51) Int. Cl.: H01M 8/2483, H01M 8/04089

(54) **EINLEGEELEMENT ZUR GLEICHMÄSSIGEN MEDIENVERTEILUNG IN BRENNSTOFFZELLENSTACKS**
INSERT MEMBER FOR UNIFORM FLUID DISTRIBUTION IN FUEL CELL STACKS
ÉLÉMENT D'INSERTION POUR LA DISTRIBUTION UNIFORME D'UN FLUIDE DANS UN EMPILEMENT DE PILES À COMBUSTIBLE

(30) Priorität: 19.12.2016 DE 102016225444
(43) Veröffentlichungstag der Anmeldung: 20.06.2018
(73) Patentinhaber: Robert Bosch GmbH, 70442 Stuttgart (DE)
(72) Erfinder: Kemmer, Helerson, 71665 Vaihingen (DE); Kotman, Philipp, 70499 Stuttgart (DE)

(56) Entgegenhaltungen:
- EP-A1- 1 469 542
- EP-A2- 0 999 605
- DE-A1- 19 905 564
- DE-A1-102014 220 682
- JP-A- 2009 021 080

## Beschreibung

Die vorliegende Erfindung betrifft Brennstoffzellenstack mit wenigstens zwei, insbesondere baugleichen, Brennstoffzellen, die insbesondere als Bipolarplatten ausgestaltet sind, und die übereinandergestapelt sind, wobei die Brennstoffzellen über zumindest eine Sammelleitung mit gleichem Querschnitt fluidtechnisch miteinander verbunden sind, wobei insbesondere Aussparungen mit gleichem Querschnitt, die Teil der Bipolarplatten sind, die Sammelleitungen bilden, wobei in und/oder an dem mindestens einen Einlegeelement zumindest ein Führungselement zur Strömungsbeeinflussung, insbesondere unmittelbar in und/oder an der mindestens einen Strömungsöffnung, ausgebildet ist. Die Erfindung betrifft auch ein Verfahren zur Herstellung eines Einlegeelements für einen solchen Brennstoffzellenstack.

### Stand der Technik

Das Dokument DE 10 2014 220 682 A1 offenbart einen Brennstoffzellenstack mit einer Sammelleitung, wobei ein Einlegeelement in die Sammelleitung einsetzbar ist, mit dem der Querschnitt der Sammelleitung zumindest abschnittsweise veränderbar ist. Die Dokumente DE 199 05 564 A1, JP 2009 021080 A, EP 1 469 542 A1 und EP 0 999 605 A2 offenbaren weiterhin, dass in dem Einlegeelement mindestens eine Strömungsöffnung für zumindest eine Brennstoffzelle eingebracht ist.

### Offenbarung der Erfindung

Die vorliegende Erfindung hat demgegenüber den Vorteil, dass mindestens ein Einlegeelement in der Sammelleitung angeordnet ist, in welches mindestens eine Strömungsöffnung für zumindest eine der Brennstoffzellen eingebracht ist, wodurch eine Zu- und/oder Abfuhr von Fluid unmittelbar für die zumindest eine Brennstoffzelle beeinflusst werden kann.

Durch die in den Unteransprüchen aufgeführten Merkmale sind vorteilhafte Weiterbildungen der Erfindung nach dem Hauptanspruch möglich. So ist es denkbar, dass in das Einlegeelement eine Vielzahl von Strömungsöffnungen eingebracht ist, wobei insbesondere jeweils mindestens eine Strömungsöffnung jeweils einer Brennstoffzelle zugeordnet ist. So kann eine Zu- und/oder Abfuhr von Fluid unmittelbar an jeder einzelnen Brennstoffzelle des Brennstoffzellenstacks beeinflusst werden.

Vorteilhaft ist es, wenn unterschiedliche Strömungsöffnungen, insbesondere entlang der Sammelleitung, unterschiedliche Querschnitte aufweisen, wodurch die Zu- und/oder Abfuhr von Fluid an jeder einzelnen Brennstoffzelle unterschiedlich gestaltet werden kann.

Besonders vorteilhaft ist es, wenn die Größe der Querschnitte der jeweiligen Strömungsöffnungen bei einer Zufuhr von Fluid in Strömungsrichtung entlang der Sammelleitung zunimmt und/oder bei einer Abfuhr von Fluid in Strömungsrichtung entlang der Sammelleitung abnimmt. So kann die Menge an strömendem Fluid nahezu gleichmäßig auf alle Brennstoffzellen verteilt werden.

Bevorzugt ist es, wenn das Einlegeelement an einer den Brennstoffzellen zugewandten Seite, insbesondre an einer den Brennstoffzellen zugewandten Wandung der Sammelleitung, angeordnet ist, wodurch eine besonders effektive Beeinflussung der Zu- und/oder Abfuhr von Fluid erfolgen kann.

In einer weiteren vorteilhaften Ausführung ist ein weiteres Einlegeelement in der Sammelleitung angeordnet, wodurch eine zusätzlich Beeinflussung der Zu- und/oder Abfuhr von Fluid ermöglicht wird.

Besonders bevorzugt ist es, wenn das weitere Einlegeelement an einer von den Brennstoffzellen abgewandten Seite, insbesondre an einer von den Brennstoffzellen abgewandten Wandung der Sammelleitung, angeordnet ist, wodurch eine besonders effektive, zusätzliche Beeinflussung der Zu- und/oder Abfuhr von Fluid erfolgen kann.

Besonders vorteilhaft ist es, wenn an dem mindestens einen weiteren Einlegeelement mindestens ein Führungselement, insbesondere gegenüberliegend von mindestens einer Strömungsöffnung, ausgebildet ist, wodurch die Zu- und/oder Abfuhr von Fluid zusätzlich verbessert werden kann.

Die Erfindung betrifft auch ein Verfahren zur Herstellung mindestens eines Einlegeelements für einen Brennstoffzellenstack nach der vorhergehenden Beschreibung. Das Verfahren zeichnet sich dadurch aus, dass in das Einlegeelement, insbesondere mittels eines Stanzverfahrens, mindestens eine Strömungsöffnung eingebracht wird, wobei durch das Einbringen der Strömungsöffnung mindestens ein weiteres Führungselement, vorzugsweise unmittelbar in- und/oder an der mindestens einen Strömungsöffnung, ausgebildet wird. Dadurch wird eine kostengünstige Herstellung des Einlegeelements für einen Brennstoffzellenstack ermöglicht.

### Zeichnungen

In den Zeichnungen sind Ausführungsbeispiele der Erfindung schematisch dargestellt und in der nachfolgenden Beschreibung näher erläutert. Es zeigen
- Fig. 1: eine schematische Darstellung einer als Bipolarplatte ausgestalteten Brennstoffzelle,
- Fig. 2: eine schematische, perspektivische Ansicht von übereinander gestapelten Bipolarplatten aus Fig. 1 mit zusätzlicher Medienleitung,
- Fig. 3: eine schematische Darstellung eines Querschnitts eines Brennstoffzellenstacks,
- Fig. 4: eine schematische, perspektivische Ansicht eines Ausführungsbeispiels eines Brennstoffzellenstacks mit einem Einlegeelement,
- Fig. 5: eine schematische Darstellung eines Querschnitts des Ausführungsbeispiels eines Brennstoffzellenstacks mit einem Einlegeelement aus Figur 4,
- Fig. 6: eine schematische Darstellung eines Querschnitts eines weiteren Ausführungsbeispiels eines Brennstoffzellenstacks mit einem Einlegeelement,
- Fig. 7: eine schematische Darstellung eines Querschnitts eines weiteren Ausführungsbeispiels eines Brennstoffzellenstacks mit einem Einlegeelement und einem weiteren Einlegeelement,
- Fig. 8: eine schematische Darstellung eines Querschnitts eines weiteren Ausführungsbeispiels eines Brennstoffzellenstacks mit nur einem weiteren Einlegeelement.

### Beschreibung

In den unterschiedlichen Figuren sind gleiche Bauteile, bzw. Komponenten, stets mit denselben Bezugszeichen versehen, weshalb diese in der Regel nur einmal beschrieben werden.

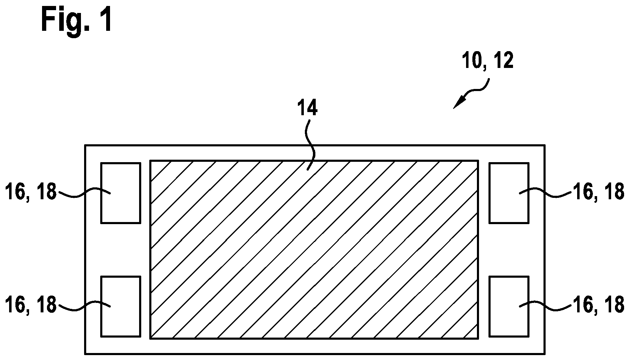

In Figur 1 ist eine schematische Darstellung einer als Bipolarplatte 10 ausgestalteten Brennstoffzelle 12 gezeigt. Die schraffierte Fläche stellt die aktive Fläche 14 der Bipolarplatte 10 dar. Auf der aktiven Fläche 14 befinden sich bspw. die Membran-Elektrodeneinheiten. Links und rechts der aktiven Fläche 14 sind jeweils zwei übereinander liegende Aussparungen 16 ausgebildet, die als Versorgungsöffnungen 18 dienen. Die Bipolarplatte 10 ist als Gleichteil ausgestaltet, um die Kosten der Herstellung möglichst gering zu halten. Die als Aussparungen 16 ausgestalteten Versorgungsöffnungen 18 dienen der Zufuhr und/oder Abfuhr zumindest eines Fluides, in den gezeigten Ausführungsbeispielen Brenngas, Luft sowie Kühlmedium. Wie in der Figur 1 zu erkennen ist, weisen die als Versorgungsöffnung ausgestalteten Aussparungen 16 einen Querschnitt auf, der aufgrund der Gleichbauweise der Bipolarplatten 10 immer gleich ist.

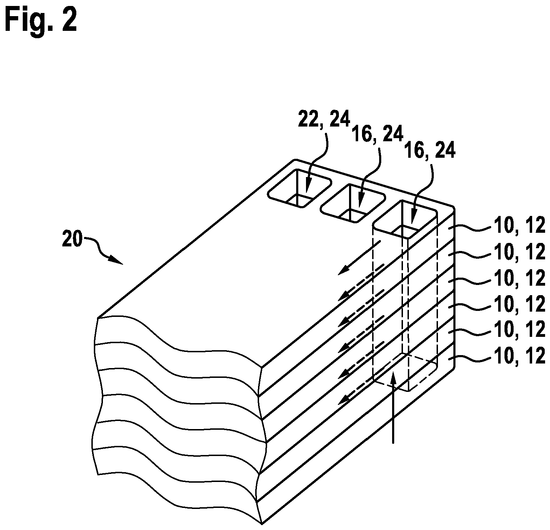

In der Figur 2 sind mehrere ähnlich der in Figur 1 dargestellten Bipolarplatten 10 zu einem Brennstoffzellenstack 20 übereinander gestapelt. Im Gegensatz zu der in der Figur 1 dargestellten Bipolarplatte 1 weisen die in der Figur 2 zu einem Brennstoffzellenstack 20 übereinander gestapelten Bipolarplatten 10 eine zusätzliche Aussparung 22 auf, die bspw. der Zu- und/oder Abfuhr eines Kühlmediums in die Bipolarplatten 10 dient. Die Aussparungen 16 und 22 bilden aufgrund der Gleichbauweise der Bipolarplatten 10 jeweils gemeinsame Sammelleitungen 24 aus, durch die zumindest ein Fluid, bspw. Brenngas, Luft oder Kühlmedium zu den einzelnen Brennstoffzellen Bipolarplatten 10 des Brennstoffzellenstacks 20 geleitet werden. Da die Bipolarplatten 10 und damit auch die als Aussparungen 16 ausgestalteten Versorgungsöffnungen 18 in Gleichteilbauweise ausgestaltet sind, weisen die Sammelleitungen 24 in der Aufeinanderfolge der Bipolarplatten 10 in dem Brennstoffzellenstack 20 stets den gleichen, d. h. einen unveränderten Querschnitt auf.

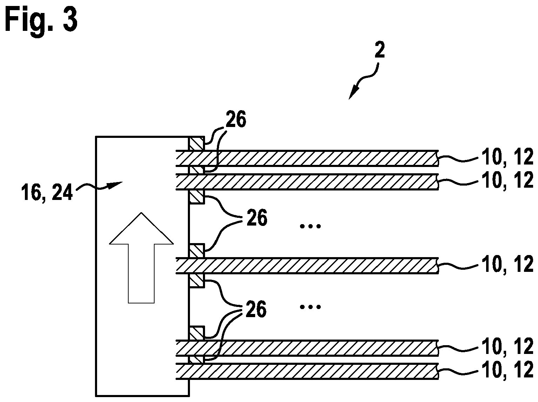

In Figur 3 ist eine schematische Darstellung eines Querschnitts eines Brennstoffzellenstacks 20 gezeigt. Der Brennstoffzellenstack 20 weist eine Vielzahl von, insbesondere baugleichen, Brennstoffzellen 12 auf, die im gezeigten Ausführungsbeispiel als Bipolarplatten 10 ausgestaltet sind, und die übereinandergestapelt sind. Dabei sind zwischen den Brennstoffzellen 12, bzw. Bipolarplatten 10, Dichtungen 26 angeordnet. Die Brennstoffzellen 12, bzw. die Bipolarplatten 10, sind über zumindest eine Sammelleitung 22 mit gleichem Querschnitt fluidtechnisch miteinander verbunden, wobei insbesondere Aussparungen 16 mit gleichem Querschnitt, die Teil der Bipolarplatten 10 sind, die Sammelleitungen bilden.

Die vorliegende Erfindung zeichnet sich nun dadurch aus, dass ein Einlegeelement 28 in zumindest einer der Sammelleitung 24 angeordnet ist, in welches mindestens eine Strömungsöffnung 30 für zumindest eine der Brennstoffzellen 12, bzw. der Bipolarplatten 10, eingebracht ist. Dadurch kann die Zu- und/oder Abfuhr von Fluid für zumindest eine der Brennstoffzellen 12, bzw. der Bipolarplatten 10, beeinflusst werden.

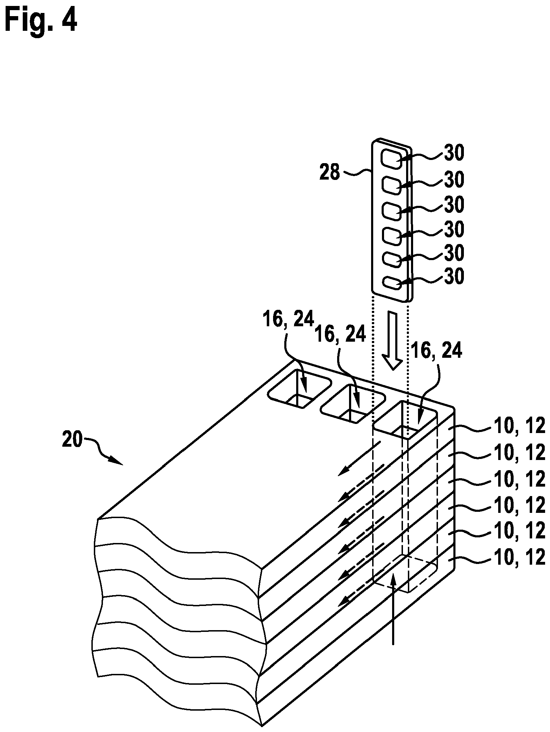

Entsprechend ist in Figur 4 eine schematische, perspektivische Ansicht eines Ausführungsbeispiels eines Brennstoffzellenstacks 20 mit einem Einlegeelement 28 gezeigt. Das Einlegeelement 28 wird in die Sammelleitung 24 eingelegt, über welche den Brennstoffzellen 12, bzw. den Bipolarplatten 10, Luft zugeführt wird.

In dem gezeigten Ausführungsbeispiel ist in das Einlegeelement 28 eine Vielzahl von Strömungsöffnungen 30 eingebracht, wobei jeweils eine Strömungsöffnung 30 jeweils einer Brennstoffzelle 12, bzw. einer Bipolarplatte 10, zugeordnet ist. So kann Zufuhr von Luft für jede Brennstoffzelle 12, bzw. jede Bipolarplatte 12, separat beeinflusst werden.

Die unterschiedlichen Strömungsöffnungen 30 weisen entlang der Sammelleitung 24, unterschiedliche Querschnitte auf. Dadurch kann die Zufuhr von Luft spezifisch für jede Brennstoffzelle 12 angepasst werden.

Wie man der Figur 4 entnehmen kann nimmt die Größe der Querschnitte der jeweiligen Strömungsöffnungen 30 bei einer Zufuhr von Fluid in Strömungsrichtung entlang der Sammelleitung 24 zu. So wird der Strömungswiderstand am Eintritt in die einzelnen Brennstoffzellen 12 in Strömungsrichtung entlang der Sammelleitung 12 schrittweise reduziert, wodurch eine gleichmäßige Verteilung der zugeführten Luft über alle Brennstoffzellen 12 erzielt wird.

Ebenso ist es denkbar das Einlegeelement in eine Sammelleitung 24 einzulegen, über welche ein Fluid, beispielsweise bereits reduzierte Luft oder Abgas, abgeführt wird. So wäre es auch denkbar, dass bei einer Abfuhr von Fluid die Größe der Querschnitte der jeweiligen Strömungsöffnungen 30 in Strömungsrichtung entlang einer Sammelleitung 30 abnimmt, wodurch eine gleichmäßige Abfuhr erzielt wird.

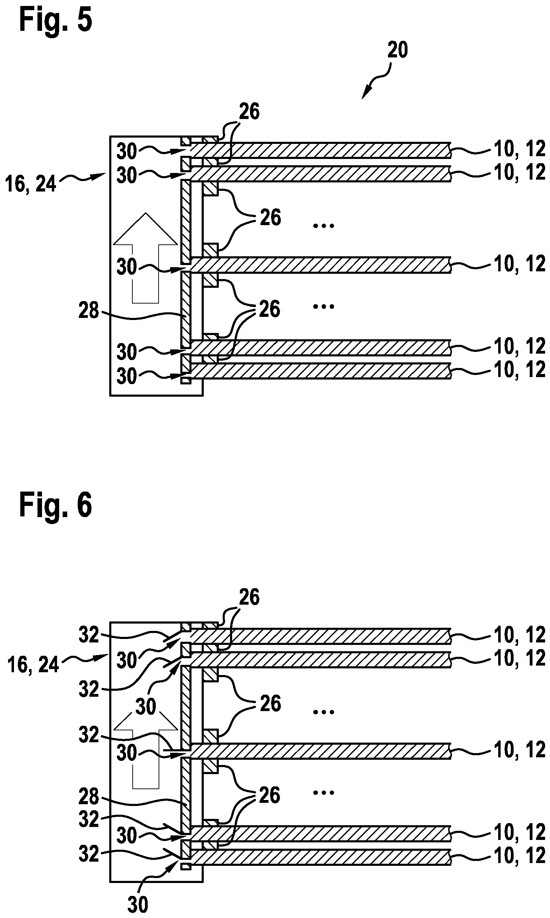

Figur 5 zeigt eine schematische Darstellung eines Querschnitts des Ausführungsbeispiels des Brennstoffzellenstacks 20 mit dem Einlegeelement 28 aus Figur 4. So lässt sich erkennen, dass das Einlegeelement 28 an einer den Brennstoffzellen 12 zugewandten Seite, bzw. an einer den Brennstoffzellen 12 zugewandten Wandung der Sammelleitung 24, angeordnet ist. Dadurch lässt sich die Strömung der zugeführten Luft unmittelbar am Eintritt jeder Brennstoffzelle spezifisch beeinflussen. Außerdem wird eine Montage des Einlegeelements 28 vereinfacht, da dieses entlang der Wandung der Sammelleitung 24 in den Brennstoffzellenstack eingeführt werden kann.

In Figur 6 ist eine schematische Darstellung eines Querschnitts eines weiteren Ausführungsbeispiels eines Brennstoffzellenstacks 20 mit einem Einlegeelement 28 gezeigt. Es lässt sich erkennen, dass an dem Einlegeelement 28 Führungselemente 32, im gezeigten Fall unmittelbar an den Strömungsöffnungen 30, ausgebildet sind. Mittels der Führungselemente 32 kann die Strömung für eine jede Brennstoffzelle 12 zusätzlich optimiert werden. So kann die Länge, die Form und die Neigung der Führungselemente 32 für jede Brennstoffzelle 12 variiert werden.

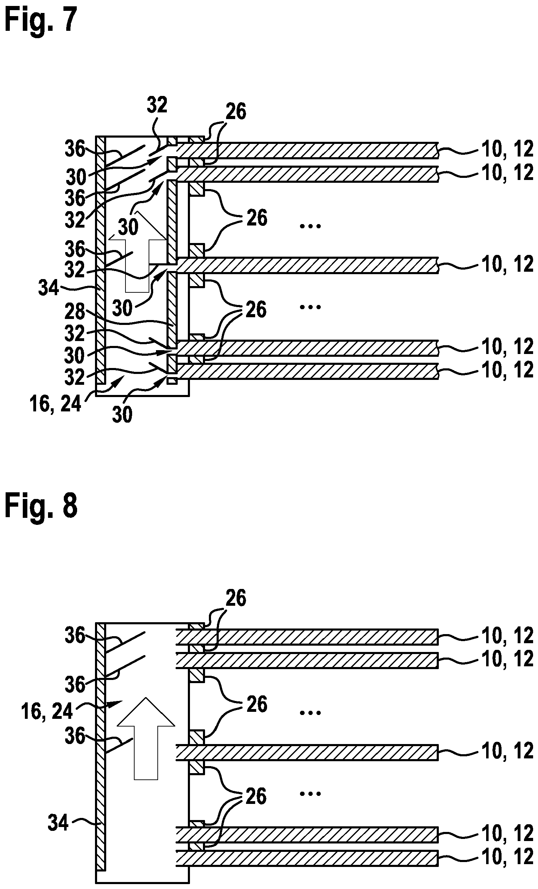

In Figur 7 ist eine schematische Darstellung eines Querschnitts eines weiteren Ausführungsbeispiels eines Brennstoffzellenstacks 20 mit einem Einlegeelement 28 gezeigt. In dem Ausführungsbeispiel ist ein weiteres Einlegeelement 34 in der Sammelleitung 24 eingebracht, wodurch eine zusätzliche Optimierung der Strömung ermöglicht wird.

Das weitere Einlegeelement 34 ist an der von den Brennstoffzellen 12 abgewandten Seite, im gezeigten Fall an der von den Brennstoffzellen 12 abgewandten Wandung der Sammelleitung 24, angeordnet. So lässt sich das weitere Einlegelement 34 einfach in den Brennstoffzellenstack einbringen.

Darüber hinaus sind an dem weiteren Einlegeelement 34 weitere Führungselemente 36, im gezeigten Fall gegenüberliegend von den Strömungsöffnung 30, ausgebildet. Durch die weiteren Führungselemente 34 kann die Strömung unterstützend zu den Führungselementen 32 für eine jede Brennstoffzelle 12 beeinflusst und optimiert werden.

Alternativ ist es aber auch denkbar, dass in einem weiteren Ausführungsbeispiel lediglich das weitere Führungselement 34 in die Sammelleitung 24 eingebracht ist. Entsprechend ist in Figur 8 eine schematische Darstellung eines Querschnitts eines weiteren Ausführungsbeispiels eines Brennstoffzellenstacks 20 mit nur dem einen weiteren Einlegeelement 34 gezeigt. Ebenso ist es denkbar, dass das Einlegeelement 28 an der von den Brennstoffzellen 12 abgewandten Seite, im gezeigten Fall an der von den Brennstoffzellen 12 abgewandten Wandung der Sammelleitung 24, angeordnet wird.

Darüber hinaus betrifft die Erfindung auch ein Verfahren zur Herstellung des Einlegeelements 28 für einen Brennstoffzellenstack 20. Das Verfahren zeichnet sich dadurch aus, dass die Strömungsöffnungen 30 in das Einlegeelement 28 eingebracht werden, wobei durch das Einbringen der Strömungsöffnungen 30 die Führungselemente 32 ausgebildet werden. Dadurch lassen sich die Führungselemente 32 gleichzeitig mit der Einbringung der Strömungsöffnungen 30 ausbilden, wodurch kosten in der Herstellung gespart werden.

Für die in Figur 6 und 7 gezeigten Ausführungsbeispiele werden die Strömungsöffnungen 30 mittels eines Stanzverfahrens in das Einlegeelement 28 eingebracht, wobei durch das Ausstanzen der Strömungsöffnungen 30 die Führungselemente 32 ausgebildet werden. In den gezeigten Fällen werden die Führungselemente 32 dabei unmittelbar in bzw. an den Strömungsöffnungen 30 ausgebildet.

Für das in Figur 8 gezeigte Ausführungsbeispiel werden die weiteren Führungselemente 36 an das weitere Einlegeelement 34 angeschweißt.

## Patentansprüche

1. Brennstoffzellenstack (20) mit wenigstens zwei, insbesondere baugleichen, Brennstoffzellen (12), die insbesondere als Bipolarplatten (10) ausgestaltet sind, die übereinandergestapelt sind, wobei die Brennstoffzellen (12) über zumindest eine Sammelleitung (24) mit gleichem Querschnitt fluidtechnisch miteinander verbunden sind, wobei insbesondere Aussparungen (16) mit im wesentlichen gleichem Querschnitt, die Teil der Bipolarplatten (10) sind, die Sammelleitungen bilden, wobei mindestens ein Einlegeelement (28) in der Sammelleitung (24) angeordnet ist, in welches mindestens eine Strömungsöffnung (30) für zumindest eine der Brennstoffzellen (12) eingebracht ist,
**dadurch gekennzeichnet, dass** in und/oder an dem mindestens einen Einlegeelement (28) zumindest ein Führungselement (32) zur Strömungsbeeinflussung, insbesondere unmittelbar in und/oder an der mindestens einen Strömungsöffnung (30), ausgebildet ist.

2. Brennstoffzellenstack (20) nach einem der vorhergehenden Ansprüche,
**dadurch gekennzeichnet, dass** in das Einlegeelement (28) eine Vielzahl von Strömungsöffnungen (30) eingebracht ist, wobei insbesondere jeweils mindestens eine Strömungsöffnung (30) jeweils einer Brennstoffzelle (12) zugeordnet ist.

3. Brennstoffzellenstack (20) nach einem der vorhergehenden Ansprüche,
**dadurch gekennzeichnet, dass** unterschiedliche Strömungsöffnungen (30), insbesondere entlang der Sammelleitung (24), unterschiedliche Querschnitte aufweisen.

4. Brennstoffzellenstack (20) nach Anspruch 3, **dadurch gekennzeichnet, dass** die Größe der Querschnitte der jeweiligen Strömungsöffnungen (30) bei einer Zufuhr von Fluid in Strömungsrichtung entlang der Sammelleitung (24) zunimmt und/oder bei einer Abfuhr von Fluid in Strömungsrichtung entlang der Sammelleitung (24) abnimmt.

5. Brennstoffzellenstack (20) nach einem der vorhergehenden Ansprüche,
**dadurch gekennzeichnet, dass** das Einlegeelement (28) an einer den Brennstoffzellen (12) zugewandten Seite, insbesondre an einer den Brennstoffzellen (12) zugewandten Wandung der Sammelleitung (24), angeordnet ist.

6. Brennstoffzellenstack (20) nach einem der vorhergehenden Ansprüche,
**dadurch gekennzeichnet, dass** ein weiteres Einlegeelement (34) in der Sammelleitung (24) angeordnet ist.

7. Brennstoffzellenstack (20) nach Anspruch 6, **dadurch gekennzeichnet, dass** das weitere Einlegeelement (34) an einer von den Brennstoffzellen (12) abgewandten Seite, insbesondre an einer von den Brennstoffzellen (12) abgewandten Wandung der Sammelleitung (24), angeordnet ist.

8. Brennstoffzellenstack (20) nach einem der Ansprüche 6 oder 7, **dadurch gekennzeichnet, dass** an dem mindestens einen weiteren Einlegeelement (34) mindestens ein weiteres Führungselement (36), insbesondere gegenüberliegend von mindestens einer Strömungsöffnung (30), ausgebildet ist.

9. Verfahren zur Herstellung mindestens eines Einlegeelements (28) für einen Brennstoffzellenstack (20) nach einem der vorhergehenden Ansprüche, **dadurch gekennzeichnet, dass** in das Einlegeelement (28), insbesondere mittels eines Stanzverfahrens, mindestens eine Strömungsöffnung (30) eingebracht wird, wobei durch das Einbringen der Strömungsöffnung (30) das mindestens eine Führungselement (32), vorzugsweise unmittelbar in- und/oder an der mindestens einen Strömungsöffnung (30), ausgebildet wird.

## Claims

1. Fuel cell stack (20) having at least two, in particular identical, fuel cells (12), which are in particular configured as bipolar plates (10) which are stacked above one another, the fuel cells (12) being connected fluidically to one another via at least one manifold (24) with the same cross section, in particular cut-outs (16) with substantially the same cross section, which are part of the bipolar plates (10), forming the manifolds, at least one insert member (28) being arranged in the manifold (24), into which at least one flow opening (30) for at least one of the fuel cells (12) is introduced,
**characterized in that** at least one guide element (32) for influencing flow is formed in and/or on the at least one insert member (28), in particular immediately in and/or on the at least one flow opening (30).

2. Fuel cell stack (20) according to one of the preceding claims, **characterized in that** a multiplicity of flow openings (30) are introduced into the insert member (28), wherein in particular at least one respective flow opening (30) is respectively assigned to a fuel cell (12).

3. Fuel cell stack (20) according to one of the preceding claims, **characterized in that** different flow openings (30), in particular along the manifold (24), have different cross sections.

4. Fuel cell stack (20) according to Claim 3,
**characterized in that** the size of the cross sections of the respective flow openings (30) increases in the flow direction along the manifold (24) with a supply of fluid, and decreases in the flow direction along the manifold (24) with a discharge of fluid.

5. Fuel cell stack (20) according to one of the preceding claims, **characterized in that** the insert member (28) is arranged on a side that faces the fuel cells (12), in particular on a wall of the manifold (24) that faces the fuel cells (12).

6. Fuel cell stack (20) according to one of the preceding claims, **characterized in that** a further insert member (34) is arranged in the manifold (24) .

7. Fuel cell stack (20) according to Claim 6,
**characterized in that** the further insert member (34) is arranged on a side that faces away from the fuel cells (12), in particular on a wall of the manifold (24) that faces away from the fuel cells (12).

8. Fuel cell stack (20) according to either of Claims 6 and 7, **characterized in that** at least one further guide element (36) is formed on the at least one further insert member (34), in particular opposite at least one flow opening (30) .

9. Method for producing at least one insert member (28) for a fuel cell stack (20) according to one of the preceding claims, **characterized in that** at least one flow opening (30) is introduced into the insert member (28), in particular by means of a punching process, wherein the at least one guide element (32) is formed by the introduction of the flow opening (30), preferably directly in and/or on the at least one flow opening (30).

## Revendications

1. Empilement de piles à combustible (20) comportant au moins deux piles à combustible (12), en particulier identiques, qui sont conçues en particulier sous la forme de plaques bipolaires (10) empilées les unes sur les autres, dans lequel les piles à combustible (12) sont reliées les unes aux autres par la technique des fluides par l'intermédiaire d'au moins une conduit collecteur (24) ayant la même section transversale, dans lequel des évidements (16) de section sensiblement identique qui font partie des plaques bipolaires (10) forment en particulier les conduits collecteurs, dans lequel au moins un élément d'insertion (28) est disposé dans la conduit collecteur (24) dans laquelle est ménagée au moins une ouverture d'écoulement (30) pour au moins l'une des piles à combustible (12),
**caractérisé en ce qu'**au moins un élément de guidage (32) destiné à influencer l'écoulement, en particulier directement dans et/ou sur ladite au moins une ouverture d'écoulement (30), est réalisé dans et/ou sur ledit au moins un élément d'insertion (28).

2. Empilement de piles à combustible (20) selon l'une des revendications précédentes, **caractérisé en ce qu'**une pluralité d'ouvertures d'écoulement (30) est ménagée dans l'élément d'insertion (28), dans lequel au moins une ouverture d'écoulement (30) est en particulier respectivement associée à une pile à combustible (12) respective.

3. Empilement de piles à combustible (20) selon l'une des revendications précédentes, **caractérisé en ce que** des ouvertures d'écoulement (30) différentes, en particulier le long du conduit collecteur (24), présentent des sections transversales différentes.

4. Empilement de piles à combustible (20) selon la revendication 3, **caractérisé en ce que** la taille des sections transversales des ouvertures d'écoulement (30) respectives augmente lors d'un apport du fluide dans la direction d'écoulement le long du conduit collecteur (24) et/ou diminue lorsque lors d'un refoulement du fluide le long du conduit collecteur (24).

5. Empilement de piles à combustible (20) selon l'une des revendications précédentes, **caractérisé en ce que** l'élément d'insertion (28) est disposé sur un côté tourné vers les piles à combustible (12), en particulier sur une paroi du conduit collecteur (24) qui est tournée vers les piles à combustible (12).

6. Empilement de piles à combustible (20) selon l'une des revendications précédentes, **caractérisé en ce qu'**un autre élément d'insertion (34) est disposé dans la conduit collecteur (24).

7. Empilement de piles à combustible (20) selon la revendication 6, **caractérisé en ce que** l'autre élément d'insertion (34) est disposé sur un côté tourné à l'opposé des piles à combustible (12), en-particulier sur une paroi du conduit collecteur (24) qui est tournée à l'opposé des piles à combustible (12).

8. Empilement de piles à combustible (20) selon l'une des revendications 6 ou 7, **caractérisé en ce qu'**au moins un autre élément de guidage (36), en particulier opposé à au moins une ouverture d'écoulement (30), est réalisé sur ledit au moins un autre élément d'insertion (34) .

9. Procédé de fabrication d'au moins un élément d'insertion (28) pour un empilement de piles à combustible (20) selon l'une des revendications précédentes, **caractérisé en ce qu'**au moins une ouverture d'écoulement (30) est ménagée dans l'élément d'insertion (28), en particulier au moyen d'un procédé de poinçonnage, dans lequel ledit au moins un élément de guidage (32) est réalisé, de préférence directement dans et/ou sur ladite au moins une ouverture d'écoulement (30), lorsque l'ouverture d'écoulement (30) est ménagée.
